# EUROPÄISCHE PATENTSCHRIFT

(11) **EP 4 217 958 B1**
(45) Veröffentlichungstag und Bekanntmachung des Hinweises auf die Patenterteilung: **05.11.2025**
(21) Anmeldenummer: 21782706.2
(22) Anmeldetag: 22.09.2021
(51) Int. Cl.: G06T 5/80, G02B 27/00, G06T 5/50

(54) **VERFAHREN ZUR ERSTELLUNG EINER BILDAUFZEICHNUNG**
METHOD FOR CREATING A PICTURE RECORDING
PROCÉDÉ DE CRÉATION D'UN ENREGISTREMENT D'IMAGE

(30) Priorität: 22.09.2020 LU 102086; 22.09.2020 LU 102084
(43) Veröffentlichungstag der Anmeldung: 02.08.2023
(73) Patentinhaber: K/Lens GmbH, 66121 Saarbrücken (DE)
(72) Erfinder: ILLGNER, Klaus, 82319 Starnberg (DE)
(74) Vertreter: Patentanwälte Bernhardt / Wolff Partnerschaft mbB
(86) Internationale Anmeldenummer: PCT/EP2021/076016
(87) Internationale Veröffentlichungsnummer: WO 2022/063806

(56) Entgegenhaltungen:
- WO-A1-2013/086473
- MATYSIAK PIERRE ET AL: "High Quality Light Field Extraction and Post-Processing for Raw Plenoptic Data", IEEE TRANSACTIONS ON IMAGE PROCESSING, IEEE, USA, vol. 29, 23 January 2020 (2020-01-23), pages 4188 - 4203, XP011771447, ISSN: 1057-7149, [retrieved on 20200207], DOI: 10.1109/TIP.2020.2967600
- ANDREW JONES ET AL: "Rendering for an interactive 360Â° light field display", ACM TRANSACTIONS ON GRAPHICS, ACM, NY, US, vol. 26, no. 3, 29 July 2007 (2007-07-29), pages 40 - es, XP058336098, ISSN: 0730-0301, DOI: 10.1145/1276377.1276427
- M. UMAIR MUKATI ET AL: "Light Field Stitching for Extended Synthetic Aperture", 15 November 2016 (2016-11-15), XP055364593, Retrieved from the Internet <URL:https://arxiv.org/pdf/1611.05003.pdf> [retrieved on 20170413]

## Beschreibung

Die Erfindung betrifft ein Verfahren zur Erstellung einer plenoptischen Bildaufzeichnung, bei dem mehrere Abbildungen eines Objektbereichs, die mittels einer optischen Einrichtung gleichzeitig nebeneinander auf einer Empfängerfläche erzeugt und digital gespeichert werden, zu Bildaufnahmen weiterarbeitet werden, wobei bei der Weiterverarbeitung automatisch eine Bildkorrektur erfolgt, bei der zumindest eine der Bildaufnahmen gegenüber der jeweiligen Abbildung geändert wird.

Die Erfindung betrifft ferner ein Computerprogrammprodukt, eine Vorrichtung zur Datenverarbeitung und ein Datenträgersignal.

Ein Verfahren der eingangs genannten Art ist bekannt aus MATYSIAK PIERRE ET AL, "High Quality Light Field Extraction and Post-Processing for Raw Plenoptic Data", IEEE TRANSACTIONS ON IMAGE PROCESSING, IEEE, USA, vol. 29, doi:10.1109/TIP.2020.2967600, ISSN 1057-7149, (20200123), pages 4188 - 4203.

In der Veröffentlichung ANDREW JONES ET AL, "Rendering for an interactive 360Â° light field display", ACM TRANSACTIONS ON GRAPHICS, ACM, NY, US, (20070729), vol. 26, no. 3, doi:10.1145/1276377.1276427, ISSN 0730-0301, pages 40 - es ist eine Verfahren zum Rendering für ein interaktives 360°-Lichtfeld-Display beschrieben.

Die WO 2014/124982 A1 beschreibt eine plenoptische Kamera, die ein Objektiv umfasst, das mehrere Spiegel enthält, die ein Kaleidoskop bilden. Bei Erstellung einer Bildaufnahme treten Lichtstrahlen durch eine Hauptlinsengruppe in das Objektiv ein, werden durch die Hauptlinsengruppe in das Kaleidoskop gegeben und hinter dem Kaleidoskop von einer weiteren Linsengruppe auf einen Sensor geführt. Das Kaleidoskop ist derart aufgebaut, dass die genannten Abbildungen, die aufgrund der Wirkung des Kaleidoskops den Objektbereich aus geringfügig unterschiedlichen Blickwinkeln erfassen, aber dennoch einen identischen Objektbereich darstellen, auf dem Sensor nebeneinander in einem 3 x 3 - Raster erzeugt werden. Dank der Erfassung der Abbildungen aus den unterschiedlichen Blickwinkeln, können u.a. aus den Abbildungen Informationen über die räumliche Position von in den Abbildungen abgebildeten Punkten erlangt werden.

Weiterer relevanter Stand der Technik ist die Veröffentlichung M. Umair Mukati ET AL, "Light Field Stitching for Extended Synthetic Aperture", (20161115), URL: https://arxiv.org/pdf/1611.05003.pdf, (20170413).

Der Erfindung liegt die Aufgabe zugrunde, die Erstellung einer plenoptischen Bildaufzeichnung zu vereinfachen.

Erfindungsgemäß wird diese Aufgabe dadurch gelöst, dass die Bildpunkte unter Anwendung von für jede der Abbildungen vorgesehenen Bildpunktkorrekturregeln verändert werden, wobei die Bildpunktpositionen unter Anwendung von für jede der Bildaufnahmen vorgesehenen Bildpunktanordnungsregeln und/oder die Intensitäten und/oder die Farben der Darstellung der Bildpunkte unter Anwendung von für jede der Bildaufnahmen vorgesehenen Bildpunktintensitäts- und/oder Bildpunktfarbänderungsregeln geändert werden.

Die Bildkorrekturregeln für die einzelnen Abbildungen unterscheiden sich zweckmäßigerweise voneinander. Vorteilhaft können somit die einzelnen Abbildungen separat und individuell für die Aufnahmen aus den verschiedenen Blickwinkeln korrigiert werden.

Schon eine geringe Abweichung von der vorgesehenen Position oder Form von Bauelementen der optischen Einrichtung kann dazu führen, dass in den Bildern unerwünscht unterschiedliche Abbildungsbereiche erfasst werden oder dass von Abbildung zu Abbildung individuelle Abbildungsfehler wie beispielsweise Verzerrungen oder Vignettierungen auftreten.

Dies gilt insbesondere, wenn die optische Einrichtung wie unten näher erläutert zumindest einen Spiegel und/oder zumindest ein Prisma aufweist und/oder ein Kaleidoskop umfasst und dadurch Strahlengänge vorgesehen sind derart, dass sich die Abbildungen des Objektbereichs gleichzeitig mehrfach auf der Empfängerfläche erzeugen lassen, wobei die verschiedenen Abbildungen bevorzugt nebeneinander, insbesondere vertikal und/oder horizontal nebeneinander, angeordnet sind. Vorzugsweise werden die verschiedenen Abbildungen jeweilig als zusammenhängende und/oder vollständige Abbildungen auf der Empfängerfläche erzeugt.

Dank der erfindungsgemäßen Weiterverarbeitung wird es möglich, die einzelnen den Objektbereich mehrfach auf der Empfängerfläche, insbesondere vollständig und nebeneinander, wiedergebenden Abbildungen automatisch jeweilig individuell zu korrigieren. Zweckmäßigerweise wird für jede der Abbildungen eine für die jeweilige Abbildung spezifische Bildkorrektur durchgeführt, wobei sich die jeweiligen spezifischen Bildkorrekturen für die einzelnen Abbildungen vorzugsweise voneinander unterscheiden.

Die abbildungsspezifische Bildkorrektur ist vorteilhaft, weil jede der Abbildungen mittels der optischen Einrichtung über unterschiedliche Strahlengänge nebeneinander auf der Empfängerfläche erzeugt werden und die Abbildungen folglich separater Korrekturen bedürfen. Aufgrund der komplizierten Strahlengänge in der optischen Einrichtung, die Mehrfachreflexionen umfassen können, können schon geringe toleranzbedingte Abweichungen der vorgesehenen Anordnungen oder Formen einzelner optischer Bauteile der optischen Einrichtung zu Abbildungsfehlern führen, die sich für jede der Abbildungen unterscheiden und darüber hinaus für die jeweilig verwendete optische Einrichtung charakteristisch sind. Solche Abbildungsfehler können zur Folge haben, dass in den Bildern unerwünscht unterschiedliche Abbildungsbereiche erfasst werden oder dass von Abbildung zu Abbildung individuelle Abbildungsfehler wie beispielsweise Verzerrungen oder Vignettierungen auftreten.

Das erfindungsgemäße Verfahren wird in der bevorzugten Ausführungsform der Erfindung von einem Computer ausgeführt.

In einer Ausgestaltung der Erfindung erfolgt bei der Weiterverarbeitung zumindest einzelner der Abbildungen automatisch eine die Bildaufnahme gegenüber der jeweiligen Abbildung ändernde Bildkorrektur derart, dass die Bildaufnahmen aneinander angeglichen werden.

Durch eine Angleichung der aus den einzelnen Abbildungen gebildeten Bildaufnahmen welche insbesondere die Anordnung, die Intensität und/oder die Farbe der Bildpunkte in den zwei Dimensionen betrifft, geben die Bildaufnahmen den Objektbereich einheitlich wieder. Deshalb können vergleichsweise einfach aus den Bildaufnahmen einheitliche Bildinformationen für eine plenoptischen Bildaufzeichnung generiert werden, die zusätzlich zu den herkömmlichen Bildinformationen in zwei Dimensionen senkrecht zur optischen Achse der optischen Einrichtung Informationen über die räumliche Anordnung und ggf. der Form von Gegenständen im Objektbereich in Richtung parallel zur optischen Achse enthält. Darüber hinaus wird es durch die Angleichung möglich, jede der Bildaufnahmen zur Erstellung einer Bildwiedergabe zu verwenden. Als besonders vorteilhaft hat es sich erwiesen, dass bei der Bildwiedergabe ein in der Darstellung übergangloser Wechsel zwischen den Bildaufnahmen aus den verschiedenen Blickwinkeln möglich wird.

Als besonders vorteilhaft hat es sich erwiesen, die Bildaufnahmen, insbesondere unter Angleichung, derart zu korrigieren, dass
- eine einzelne oder jede der Bildaufnahmen so geändert wird bzw. werden, dass sämtliche der Bildaufnahmen denselben Objektbereich abbilden,
- Positionen der Bildpunkte in einer einzelnen oder jeder der Bildaufnahmen, insbesondere zur Entzerrung, versetzt werden,
- Intensitäten von Bildpunkten in einer einzelnen oder jeder der Bildaufnahmen, insbesondere zur Behebung einer Verzerrung oder/und von Vignettierung und/oder zum Ausgleich von Intensitätsverlusten beim Strahlengang durch die optische Einrichtung, verändert werden,
- Helligkeiten von Bildpunkten in einzelnen Farbkanälen eines Bildsignals, vorzugsweise eines RGB-Signals, in einzelnen oder jeder der Bildaufnahmen verändert werden, insbesondere zur Behebung einer Verzerrung oder/und Vignettierung der jeweiligen Bildaufnahme,
- Farben von Bildpunkten in einzelnen Farbkanälen eines Bildsignals, vorzugsweise eines RGB-Signals, in einzelnen oder jeder der Bildaufnahmen geändert werden, oder/und
- eine oder mehrere Zwei- oder Mehrfachdarstellungen eines Punktes oder/und eines Abschnittes des Objektbereichs in einzelnen oder jeder der Bildaufnahmen, vorzugsweise durch Versatz von einem oder mehreren Teilbereichen der Aufzeichnung bzw. der Aufzeichnungen, in eine lediglich einfache Darstellung der Punkte oder Abschnitte geändert wird.

In einer Ausgestaltung der Erfindung ist die Bildkorrektur derart vorgesehen, dass bei der Weiterverarbeitung die Bildpunkte, die denselben Abschnitt des Objektbereichs wiedergeben, in den verschiedenen Bildaufnahmen aus den verschiedenen Blickwinkeln an Bildpunktpositionen angeordnet werden, die von Bildaufnahme zu Bildaufnahme in vordefinierten Bildpunktpositionen zueinander angeordnet sind. Die Bildpunktpositionen sind vorzugsweise blickwinkelabhängig, insbesondere unter Berücksichtigung eines sich aus dem jeweiligen unterschiedlichen Blickwinkel ergebenden Parallaxenfehler, vordefiniert.

Insbesondere kann die Bildkorrektur derart vorgesehen sein, dass bei der Weiterverarbeitung die Bildpunkte, die denselben Abschnitt des Objektbereichs wiedergeben, in den verschiedenen Bildaufnahmen dieselbe Intensität und/oder Farbe aufweisen.

In einer Ausgestaltung der Erfindung weist die optische Einrichtung zumindest einen Spiegel, vorzugsweise mehrere Spiegel, und/oder zumindest ein Prisma, vorzugsweise mehrere Prismen, zur Erzeugung der Abbildungen auf der Empfängerfläche auf. Der bzw. die Spiegel und/oder das Prisma bzw. die Prismen sind in der optischen Einrichtung derart angeordnet, dass auf der Empfängerfläche mehrere Abbildungen des Objektbereichs erzeugbar sind. Dazu sind im Prinzip diverse unterschiedliche Anordnungen von Spiegeln und/oder Prismen möglich. Als besonders vorteilhaft hat es sich erwiesen, die optische Einrichtung derart vorzusehen, dass mehrere Spiegel vorgesehen und derart angeordnet sind, dass die verschiedenen in einer Eintrittsöffnung eintreffenden Lichtstrahlen beim Durchgang durch die optische Einrichtung je nach Strahlengang ohne Reflexion durch die optische Einrichtung hindurchdringen oder an einer oder mehreren der Spiegelflächen, ggf. mehrfach, reflektiert werden, bevor sie die optische Einrichtung wieder verlassen.

In einer besonders bevorzugten Ausführungsform der Erfindung umfasst die optische Einrichtung ein Kaleidoskop. Ein solches Kaleidoskop umfasst zweckmäßigerweise zumindest ein Paar ebener Spiegelflächen, wobei die Spiegelflächen einander zugewandt und im Abstand voneinander angeordnet sind. Zumindest ein Teil, vorzugsweise sämtliche, Strahlengänge verlaufen durch den Raum zwischen den Spiegelflächen. Vorzugsweise sind Spiegelflächen parallel zueinander angeordnet. Das Kaleidoskop kann zwei oder mehrere Spiegelpaare aufweisen. Aus den Spiegelpaaren kann ein Rohr gebildet sein, das im Querschnitt polygonal, vorzugsweise rechteckig, ist. Das Kaleidoskop könnte alternativ durch einen zylindrischen, im Querschnitt polygonalen Glasstab gebildet sein, der verspiegelte Seitenflächen und Stirnflächen zum Ein- und Austritt der Lichtstrahlen aufweist. Der Glasstab weist im Querschnitt vorzugsweise die Form eines gleichschenkligen Dreiecks, eines Rechtecks, insbesondere Quadrats, eines regelmäßigen Fünf-, Sechs-, Sieben- oder Achtecks auf.

Zweckmäßigerweise sind die Spiegel und/oder Prismen derart vorgesehen, dass die verschiedenen Abbildungen den Objektbereich von unterschiedlichen Blickwinkeln aus aufgenommen darstellen. Somit wird es möglich, mittels der optischen Einrichtung eine plenoptische Kamera zu bilden.

In einer Ausgestaltung der Erfindung wird für die plenoptische Bildaufzeichnung ein Abbildungssystem verwendet, das mehrere, in Richtung einer optischen Achse aufeinanderfolgend angeordneten Abbildungseinrichtungen umfasst. Eine erste Abbildungseinrichtung erzeugt ein reelles Zwischenbildes des Objektbereichs in einer Zwischenbildebene, eine zweite Abbildungseinrichtung, die die genannte optische Einrichtung umfasst, erzeugt mindestens ein virtuelles Spiegelbild von dem reellen Zwischenbild, das in der Zwischenbildebene versetzt zu dem reellen Zwischenbild angeordnet ist, und eine dritte Abbildungseinrichtung erzeugt eine gemeinsame Abbildung des reellen Zwischenbildes und des virtuellen Spiegelbildes als reelles Bild auf einer in axialem Abstand zu der Zwischenbildebene anzuordnenden Bildempfängerfläche.

Zweckmäßigerweise erfolgt die Bildkorrektur an der gemeinsamen Abbildung des reellen Zwischenbildes und des mindestens eine virtuellen Spiegelbildes als reelles Bild.

Vorzugsweise wird für das reelle Zwischenbild und für das virtuelle Spiegelbild, besonders bevorzugt für jedes der virtuellen Spiegelbilder, die genannte spezifische Bildkorrektur durchgeführt.

In einer besonders bevorzugten Ausführungsform der Erfindung ist die optische Einrichtung in einem Objektiv angeordnet, das zumindest eine Linse aufweist, welche vorzugsweise die erste Abbildungseinrichtung bildet.

In einer bevorzugten Ausführungsform der Erfindung ist zumindest eine Lichteintrittslinse, vorzugsweise mehrere ein Lichteintrittslinsensystem bildende Lichteintrittslinsen, in Strahlengangrichtung vor der optischen Einrichtung angeordnet.

Die optische Einrichtung, die vorzugsweise die zweite Abbildungseinrichtung bildet, ist zweckmäßigerweise derart gebildet, dass die in die optische Einrichtung eintretenden Lichtstrahlen entsprechend ihrer Richtung derart aufgespaltet werden, dass sie den Objektbereich aus geringfügig unterschiedlichen Blickwinkeln erfassen, aber dennoch denselben Objektbereich darstellen.

Die Lichteintrittslinse ist zweckmäßigerweise vorgesehen derart, dass sie den Objektbereich auf eine Eingangsebene an einem der Lichteintrittslinse zugewandten Ende der optischen Einrichtung abbildet.

In einer Ausführungsform der Erfindung ist in Strahlengangrichtung gesehen hinter der optischen Einrichtung zumindest eine Lichtaustrittslinse, vorzugsweise mehrere gemeinsam ein Lichtaustrittslinsensystem bildende Lichtaustrittslinsen, angeordnet, mittels derer die Strahlengänge derart gebildet werden, dass die Abbildungen in der erfindungsgemäßen Weise auf die Empfängerfläche erzeugt werden. Die Lichtaustrittslinse bzw. die Lichtaustrittslinsen bilden vorzugsweise die genannte dritte Abbildungseinrichtung.

Zweckmäßigerweise ist das Lichtaustrittslinsensystem gebildet derart, dass seine Schärfeebene mit der Eingangsebene der optischen Einrichtung, insbesondere des Kaleidoskops, identisch ist.

Es versteht sich, dass die Anordnung der Linsen und der Spiegel oder Prismen hintereinander in den Abbildungen zu, ggf. komplexen, Bildfehlern führen kann, die sich mit konventionellen Bildkorrekturverfahren nur schwer oder nicht korrigieren lassen. Schon eine geringe Abweichung von der vorgesehenen Position oder Form einer der Linsen, der Spiegel oder der Prismen kann dazu führen, dass in den Abbildungen unerwünscht unterschiedliche Teile des Objektbereichs erfasst werden oder dass von Abbildung zu Abbildung unterschiedliche Abbildungsfehler wie bspw. Verzerrungen auftreten.

In einer besonders bevorzugten Ausführungsform der Erfindung werden auf der Empfängerfläche N x N Abbildungen des Objektbereichs gebildet und in einem N x N-Raster nebeneinander erzeugt, wobei N vorzugsweise eine ungerade Zahl repräsentiert. Zweckmäßigerweise werden die N x N Abbildungen derart gebildet, dass sie einen auslesbaren Teil der Empfängerfläche, insbesondere vollständig oder zumindest nahezu vollständig, belegen. Die Abbildungen sind in dem Raster vorzugsweise vertikal und horizontal nebeneinander angeordnet.

Die Abbildungen werden zweckmäßigerweise derart erzeugt, dass sie den Objektbereich aus verschiedenen Blickwinkeln abbilden.

Auf der Empfängerfläche werden besonders bevorzugt neun Abbildungen des Objektbereichs gebildet, die in einem 3 x 3 - Raster erzeugt sind. Alternativ können bspw. 25 Abbildungen des Objektbereichs in einem 5 x 5-Raster oder 49 Abbildungen in einem 7 x 7-Raster erzeugt werden. Es versteht sich, dass zur Erhöhung der Anzahl der erreichbaren Blickwinkel auch größere Anzahlen von Abbildungen und entsprechender Rasteranordnungen vorgesehen werden können.

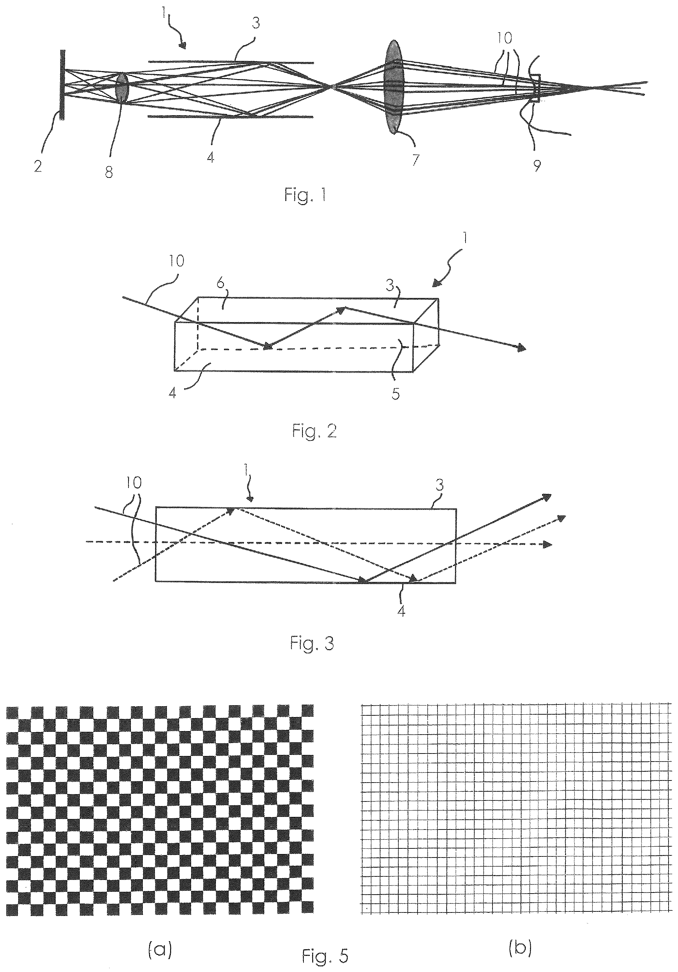

Ausführungsformen der optischen Einrichtung, insbesondere des Objektivs, sind in der WO 2014/124982 A1 beschrieben. Der Inhalt der WO 2014/124982 A1 wird in die vorliegende Anmeldung durch Bezugnahme aufgenommen. Im Einzelnen wird auf den Text auf. S. 7, 1. Absatz bis S. 11, 2. Absatz und die Fig. 1 bis 3 Bezug genommen. Dort sind geeignete optische Einrichtungen beschrieben und ihre Funktionsweise erläutert.

Das Objektiv umfasst zweckmäßigerweise Gehäuse, in dem die zumindest eine Linse und die optische Einrichtung angeordnet sind. Das Objektiv ist vorzugsweise mit einer Einrichtung zur mechanischen Befestigung an einem Kameragehäuse, bspw. einem Objektivgewinde oder einem Objektivbajonett, versehen. Es kann ferner mit einer Einrichtung zur elektrischen oder elektronischen Verbindung und/oder zur Datenübertragung mit dem Kameragehäuse vorgesehen sein.

Zweckmäßigerweise weist die Empfängerfläche zumindest einen Bildaufnahmesensor auf oder ist durch zumindest einen Bildaufnahmesensor gebildet. In der bevorzugten Ausführungsform der Erfindung ist die Empfängerfläche durch einen einzigen Bildaufnahmesensor gebildet. Der Bildaufnahmesensor ist vorzugsweise ein CCD-Sensor oder ein CMOS-Sensor.

In einer Ausgestaltung der Erfindung werden zur Durchführung der Bildkorrektur in zumindest einzelnen der Bildaufzeichnungen, vorzugsweise in jeder der Bildaufzeichnungen, Positionen zumindest einzelner der Bildpunkte und/oder Intensitäten und/oder Farben zumindest einzelner der Bildpunkte geändert. Die Bildkorrektur erfolgt vorzugsweise automatisch mittels eines Computerprogramms.

In einer Ausgestaltung der Erfindung erfolgt die Bildkorrektur derart, dass die Positionen, die Intensitäten und/oder die Farben der Bildpunkte derart geändert werden, dass die jeweilig im selben Abschnitt des Objektbereichs abbildenden Bildpunkte in den verschiedenen Aufzeichnungen in derselben Position angeordnet werden und/oder dieselbe Intensität und/oder dieselbe Farbe aufweisen.

In einer Ausgestaltung der Erfindung werden die Bildkorrekturregeln, insbesondere die Bildpunktanordnungsregeln und/oder die Bildpunktintensitäts- und/oder Bildpunktfarbänderungsregeln, durch ein Verfahren zur Bestimmung von Bildkorrekturregeln ermittelt, bei dem aus einer Bildaufzeichnung zumindest eines Referenzobjekts die Bildpunkte und/oder die erfassten Intensitäten und/oder Farben in jeder der Bildaufnahmen zweckmäßigerweise mit jeweiligen Referenzabbildungspositionen und/oder Referenzintensitäten und/oder -farben, mit welchen das Referenzobjekt zur korrekten Darstellung des aufgenommenen Bereichs zu bilden ist, verglichen werden. Die Bildkorrekturregeln, insbesondere die Bildpunktanordnungsregeln und/oder Bildpunktintensitätsänderungs- und/oder Bildfarb-änderungsregeln werden, vorzugsweise durch Ermittlung der Differenzen der Positionen, der Intensitäten und/oder der Farben der Bildaufzeichnungen mit den Referenzabbildungspositionen und/oder Referenzintensitäten und/oder -farben bestimmt.

Zweckmäßigerweise werden die Bildkorrekturregeln jeweilig für das genannte reelle Zwischenbild sowie jeweilig für das zumindest eine virtuelle Spiegelbild bzw. jedes der virtuellen Spiegelbilder jeweilig gesondert ermittelt.

In einer Ausführungsform der Erfindung wird das Referenzobjekt mittels eines Anzeigemittels, vorzugsweise eines Bildschirms oder eines Projektors, dargestellt. Vorteilhaft können besonders einfach Referenzobjekte unterschiedlicher Eigenschaften zur Kalibrierung verwendet werden. Darüber hinaus wird es möglich, die Bildkorrekturregeln einfach und schnell anhand zumindest zweier unterschiedlicher Referenzobjekte zu erstellen. Es könnten eine Vielzahl von Referenzobjekten, ggf. in kurzen zeitlichen Abständen nacheinander, dargestellt werden. Vorstellbar wäre ferner, ein Referenzobjektvideo vorzusehen, in welchem die verschiedenen Referenzobjekte nacheinander dargestellt werden.

Es versteht sich, dass für jedes der mittels des Anzeigemittels dargestellten Referenzobjekte wie oben beschrieben Referenzabbildungspositionen und/oder Referenzintensitäten und/oder -farben, mit welchen das Referenzobjekt zur korrekten Darstellung des aufgenommenen Bereichs zu bilden ist, vorgesehen sind. Vorgesehen sein könnte ein zu dem Referenzobjektvideo korrespondierendes Referenzvideo, das die jeweiligen Referenzabbildungspositionen und/oder Referenzintensitäten und/oder -farben zeigt.

Es versteht sich, dass das Verfahren zur Bestimmung von Bildkorrekturregeln, das ein auf einem Computer ausgeführtes Verfahren sein kann, unabhängig von dem Verfahren zur Erstellung einer plenoptischen Bildaufzeichnung durchgeführt werden kann. Es stellt eine eigene Erfindung dar.

Zweckmäßigerweise wird zur Bestimmung der Korrekturregeln das Referenzobjekt, das bei der Bildaufnahme in einer Referenzposition zu der optischen Einrichtung angeordnet ist, mit einer Referenzbeleuchtung beleuchtet und/oder weist eine Referenzfärbung auf.

Es hat sich als besonders vorteilhaft erwiesen, als das Referenzobjekt ein in einer Ebene gebildetes Referenzmuster vorzusehen, wobei die Ebene senkrecht zur optischen Achse und/oder parallel zur Sensorebene vor der optischen Einrichtung angeordnet wird. Das Referenzmuster umfasst zweckmäßigerweise Linien oder Flächen, die geradlinige Ränder aufweisen. Vorzugsweise ist das Referenzmuster durch mehrere gerade Linien, die rasterartig parallel und/oder senkrecht zueinander angeordnet sind, gebildet. Alternativ oder ergänzend dazu könnte als das Muster beispielsweise ein Schachbrettmuster oder zumindest eine andere regelmäßige Formung oder Struktur, die einen Vergleich der Informationen aus den verschiedenen Abbildungen und eine Ermittlung der Bildpunktanordnungsregeln und/oder der Bildpunktintensitäts- und/oder Bildpunktfarbänderungsregeln erlaubt.

In einer Ausgestaltung der Erfindung ist die Bildkorrektur derart vorgesehen, dass bei der Weiterverarbeitung die Bildpunkte, die denselben Abschnitt des Referenzmusters wiedergeben, in den verschiedenen Bildaufnahmen an derselben Stelle angeordnet sind.

In einer Ausführungsform der Erfindung werden Bildkorrekturregeln, die Bildpunktbereiche betreffen, die sich nicht unmittelbar in dem Referenzmuster finden, erzeugt, beispielsweise durch Interpolation.

Zweckmäßigerweise werden Bildkorrekturregeln, insbesondere die Bildpunktersetzungsregeln und/oder die Bildpunktintensitäts- und/oder Bildpunktfarbänderungsregeln gespeichert, vorzugsweise als ein Datensatz zur Nutzung in einem Computerprogramm zur Durchführung der Bildkorrektur. Der Datensatz kann Metadaten für mittels der optischen Einrichtung erzeugten plenoptischen Bildaufzeichnung umfassen. Zweckmäßigerweise wird sie gemeinsam mit der optischen Einrichtung, insbesondere dem Objektiv, bereitgestellt, beispielsweise als Datei auf einem Datenspeichermedium, das physikalisch mit der optischen Einrichtung verbunden sein kann, oder als über ein Rechnernetzwerk, bspw. das Internet abrufbare, den Datensatz darstellende Signalfolge. Vorstellbar wäre, an der optischen Einrichtung, z.B. an dem Gehäuse des Objektivs, einen Link zu einer in dem Rechnernetzwerk, insbesondere dem Internet, hinterlegten Datei vorzusehen. Der Link könnte beispielsweise ein QR-Link o. dgl. sein.

Ferner können sich die Bildkorrekturregeln, insbesondere die Bildpunktanordnungsregeln und/oder die Bildpunktintensitäts- und/oder Bildpunktfarbänderungsregeln in Abhängigkeit von der Fokuseinstellung der optischen Einrichtung voneinander unterscheiden. Zweckmäßigerweise werden zu deren Bestimmung zumindest zwei, vorzugsweise mehrere Bildaufzeichnungen zumindest eines Referenzobjektes in unterschiedlichen, im Abstand voneinander angeordneten Schärfeebenen erzeugt. Für Fokuseinstellungen, die außerhalb dieser Schärfeebene liegen, können die Bildpunktanordnungsregeln und/oder die Bildpunktintensitäts- und/oder Bildpunktfarbänderungsregeln aus den Regeln, die mittels der Bildaufzeichnungen in den Schärfeebenen bestimmt worden sind, ermittelt werden, beispielsweise durch Interpolation.

Ist die optische Einrichtung, insbesondere das Objektiv, wie nach einer Ausführungsform der Erfindung vorgesehen, zur Verstellung seiner Schärfeebene eingerichtet, wird die Bildkorrektur vorzugsweise in Abhängigkeit von der Einstellung der Schärfeebene der optischen Einrichtung durchgeführt.

Zweckmäßigerweise wird der Versatz konkret lediglich für einzelne Punkte in den Bildaufnahmen bestimmt und der jeweilig notwendige Versatz in den Bereichen zwischen den Punkten durch Interpolation ermittelt.

In analoger Weise kann auch die notwendige Änderung der Intensität und/oder der Farbe lediglich für einzelne Punkte bestimmt und die jeweilig notwendige Intensitäts- bzw. Farbänderung in den Bereichen zwischen den Punkten durch Interpolation ermittelt werden.

Die Erfindung erweist sich als besonders vorteilhaft, da sich mittels des Verfahrens optische Einrichtungen, insbesondere Objektive, der obengenannten Art, auch wenn sie in einer Massenfertigung hergestellt werden und toleranzbedingte Unterschiede in der Anordnung und Form ihrer jeweiligen optischen Elemente wie die Linsen, Spiegel, Prismen u. dgl. aufweisen, einfach für die Benutzung vorbereiten lassen. So kann das Verfahren innerhalb eines Prozesses zur Vorbereitung der optischen Einrichtung zur Abgabe an einen Benutzer durchgeführt werden und die dabei gewonnenen Informationen, insbesondere die Bildkorrekturregeln, in einem Datensatz zur Nutzung mittels eines Computerprogramms gespeichert werden, das zusammen mit der optischen Einrichtung ausgegeben wird. Zweckmäßigerweise werden die Bildkorrekturregeln für jede optische Einrichtung, insbesondere jedes Objektiv, individuell ermittelt.

Zur Erzeugung der plenoptischen Bildaufzeichnung werden in einer Ausführungsform der Erfindung mittels der Empfängerfläche, insbesondere des Sensors, ermittelte Informationen zu den Abbildungen gemeinsam mit dem Datensatz gespeichert, wobei der Datensatz als Metadaten vorliegen kann. Die plenoptischen Bildaufzeichnungen können anschließend mittels eines Computerprogramms, das die Abbildungsinformationen mittels der in dem Datensatz hinterlegten Bildkorrekturregeln und der Durchführung der Bildkorrektur weiterverarbeitet, erzeugt werden.

Die Erfindung betrifft ferner ein Computerprogrammprodukt, umfassend Befehle, die bei der Ausführung des Programms durch einen Computer diesen veranlassen, zumindest einzelne Schritte des oben erläuterten Verfahrens durchzuführen. Insbesondere umfasst das Computerprogrammprodukt Befehle, die bei der Ausführung des Programms durch einen Computer diesen veranlassen, die Schritte eines Verfahrens zur Erstellung einer plenoptischen Bildaufzeichnung, bei dem mehrere Abbildgen eines Objektbereichs, die mittels einer optischen Einrichtung gleichzeitig nebeneinander auf einer Empfängerfläche erzeugt und digital gespeichert werden, zu Bildaufnahmen weiterarbeitet werden, wobei bei der Weiterverarbeitung automatisch eine Bildkorrektur erfolgt, bei der zumindest eine der Bildaufnahmen gegenüber der jeweiligen Abbildung geändert wird.

Zweckmäßigerweise kann das Computerprogrammprodukt direkt in den internen Speicher eines digitalen Computers, insbesondere einem Computer einer Vorrichtung zur Erstellung einer Bildaufzeichnung, geladen werden und umfasst Softwareabschnitte, die die Verfahrensschritte durchführen, wenn das Computerprogrammprodukt auf dem Computer abläuft.

Zweckmäßigerweise ist das Computerprogrammprodukt ein auf einem Datenträger, vorzugsweise RAM, ROM, CD oder dergleichen, oder einem Gerät, insbesondere einem Personalcomputer, einem Smartphone, einem Computer einer Vorrichtung zur Erstellung einer Bildaufzeichnung, insbesondere einer Foto- und/oder Videokamera, gespeichertes Computerprogramm oder eine für die Übersendung über ein Rechnernetzwerk, insbesondere das Internet, geeignete, Daten darstellende Signalfolge.

Die Erfindung betrifft ferner eine Vorrichtung zur Datenverarbeitung, die Mittel zur Durchführung des Verfahrens umfasst.

In einer Ausführungsform der Erfindung ist die Vorrichtung Teil einer optischen Einrichtung, die zur gleichzeitigen Erzeugung mehrerer Abbildungen eines Objektbereichs nebeneinander auf einer Empfängerfläche eingerichtet ist, wobei die optische Einrichtung vorzugsweise ein Kaleidoskop umfasst.

Zweckmäßigerweise ist die Vorrichtung Teil einer Kamera, insbesondere einer Foto- und/oder Videokamera.

In einer besonders bevorzugten Ausführungsform der Erfindung ist die Datenverarbeitungsvorrichtung zum Betrieb der Kamera, insbesondere Foto- und/oder Videokamera, bei der Erstellung einer Bildaufzeichnung mittels der Kamera vorgesehen.

Zweckmäßigerweise ist die Datenverarbeitungsvorrichtung Teil der optischen Einrichtung, insbesondere der Kamera, und ist dort bspw. durch einen Prozessor und einen Speicher, auf den der Prozessor zugreifen kann, gebildet.

Die Erfindung betrifft ferner eine Kamera, insbesondere Foto- und/oder Videokamera, die die genannte Datenverarbeitungsvorrichtung umfasst. Die Kamera weist zweckmäßigerweise die genannte optische Einrichtung sowie die genannte Empfängerfläche auf und ist zur Erzeugung der neun optischen Bildaufzeichnungen geeignet. In einer Ausführungsform der Erfindung umfasst die Kamera das genannte Objektiv, in dem die optische Einrichtung angeordnet ist.

Die Erfindung betrifft ferner einen Datensatz von Bildkorrekturregeln, der zur Verwendung in einem Verfahren zur Erstellung einer plenoptischen Bildaufzeichnung, bei der mittels einer optischen Einrichtung von einem Objektbereich gleichzeitig mehrere Abbildungen nebeneinander auf einer Empfängerfläche erzeugt werden und die Abbildungen zu Bildaufnahmen, die Bildpunkte aufweisen, weiterverarbeitet werden, wobei bei der Weiterverarbeitung der Abbildungen unter automatischer Anwendung der Bildkorrekturregeln eine Bildkorrektur erfolgt, bei der zumindest eine der Bildaufnahmen gegenüber der jeweiligen Abbildung geändert wird

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1: eine optische Einrichtung zur erfindungsgemäßen Bildaufzeichnung,
- Fig. 2: einen Strahlengang in der optischen Einrichtung nach Fig. 1,
- Fig. 3: weitere Strahlengänge in der optischen Einrichtung nach Fig. 1,
- Fig. 4: eine mit einer Empfangsfläche aufgenommene Abbildung,
- Fig. 5: verschiedene Referenzmuster zur Verwendung in einem erfindungsgemäßen Verfahren,
- Fig. 6: verschiedene mit der optischen Einrichtung aufgenommen Bildaufzeichnungen vor und nach der Bildkorrektur,
- Fig. 7: aufgenommene Intensitäten entlang einer Bildachse,
- Fig. 8: eine Wiedergabe von Abbildungen eines Referenzmusters, und
- Fig. 9: ein weiteres Referenzmuster zur Verwendung in einem erfindungsgemäßen Verfahren.

In Fig. 1 ist schematisch dargestellt, wie in erfindungsgemäßer Weise eine plenoptische Bildaufzeichnung unter Verwendung einer optischen Einrichtung 1 erstellt wird, die neben einer Eintrittslinse 7 und einer Austrittslinse 8 einen Spiegelkasten mit Spiegeln 3,4,5,6 aufweist, der ein Kaleidoskop bildet. Die Spiegel 3,4,5,6 sind, wie Fig. 2 zeigt, in dem Spiegelkasten im Querschnitt rechteckig angeordnet, wobei die Spiegelflächen der Spiegel auf der Spiegelkasteninnenseite angeordnet sind. Lichtstrahlen 10, die von einem Objektbereich 9, der einen Gegenstand abbildet, ausgehen, treten in die Eintrittslinse 7 ein und werden durch die Eintrittslinse in das Innere eines Spiegelkastens gelenkt. Einige der Lichtstrahlen 10 gelangen durch den Spiegelkasten hindurch bis auf die Austrittslinse 8, ohne auf einen der Spiegel 3,4,5,6 zu treffen, andere Lichtstrahlen werden lediglich ein einziges Mal an einem der Spiegel 3,4,5,6 gespiegelt, bevor sie auf die Austrittslinse 8 treffen. Weitere Lichtstrahlen wiederum werden innerhalb des Spiegelkastens an den Spiegeln 3,4,5,6 mehrfach reflektiert, wobei die Reflexion sowohl an gegenüberliegenden als auch an benachbart zueinander angeordneten Spiegeln 3,4,5,6, erfolgen kann. Die Austrittslinse 8 ist derart angeordnet, dass die aus dem Spiegelkasten austretenden Lichtstrahlen auf deine Empfängerfläche 2, die durch einen Sensor, insbesondere einen CCD- oder CMOS-Sensor gebildet ist, geleitet werden.

Die Eintrittslinse 7, die Spiegel 3,4,5,6, und die Austrittslinse 8 sind derart angeordnet, dass auf der Empfängerfläche 2 neun Abbildungen des Objektbereichs gebildet werden, die in einem 3 x 3 - Raster nebeneinander erzeugt werden. Die Abbildungen werden derart erzeugt, dass sie den Objektbereich ausgehend von der Eintrittslinse 7 aus neun verschiedenen Blickwinkeln bilden. Insbesondere werden auf der Empfängerfläche 2 jeweilig vollständige und zusammenhängende Abbildungen des Objektbereichs erzeugt.

Alternativ könnten die Eintrittslinse 7, die Spiegel 3,4,5,6 und die Austrittlinse 8 derart angeordnet sein, dass auf der Empfängerfläche N x N Abbildungen des Objektbereichs gebildet und in einem N x N-Raster nebeneinander erzeugt werden, wobei N eine ungerade Zahl repräsentiert. Neben dem obengenannten Raster kommen bspw. 25 Abbildungen des Objektbereichs in einem 5 x 5-Raster oder 49 Abbildungen in einem 7 x 7-Raster infrage. Es versteht sich, dass zur Erhöhung der Anzahl der erreichbaren Blickwinkel auch größere Anzahlen von Abbildungen und entsprechender Rasteranordnungen vorgesehen werden können.

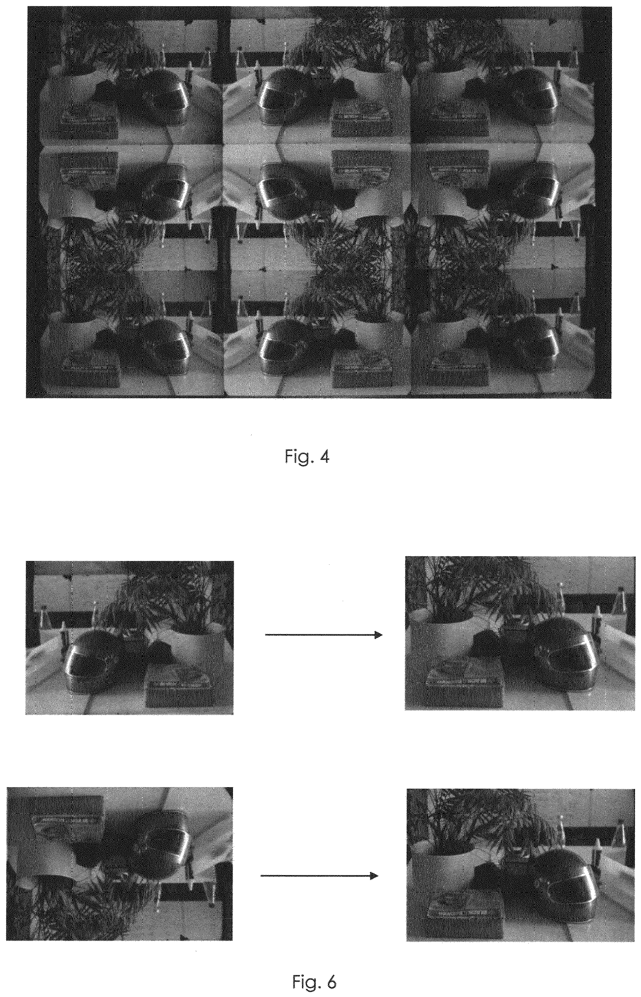

Fig. 4 zeigt beispielhaft Abbildungen eines Objektbereichs in der Form wie sie bei einer Aufnahme mit der optischen Einrichtung 1 auf der Empfängerfläche 2 aufgenommen werden. Die Abbildungen treffen wie oben erläutert in einem 3 x 3 - Raster auf der Empfängerfläche 2 auf. Die einzelnen Abbildungen stellen den Objektbereich jedoch unterschiedlich dar, beispielsweise aufgrund von Verzerrungen, Unterschieden in der Intensität der einzelnen einander entsprechenden Bildpunkte sowie der (hier nicht wiedergegebenen) Farbgebung.

Die unterschiedlichen Darstellungen ergeben sich zum einen aus der Aufnahme aus den genannten unterschiedlichen Blickwinkeln. Darüber hinaus ergeben sich aufgrund der Anordnung der Spiegel und der sich daraus ergebenden recht komplizierten Strahlengänge Abbildungsfehler und Intensitätsunterschiede.

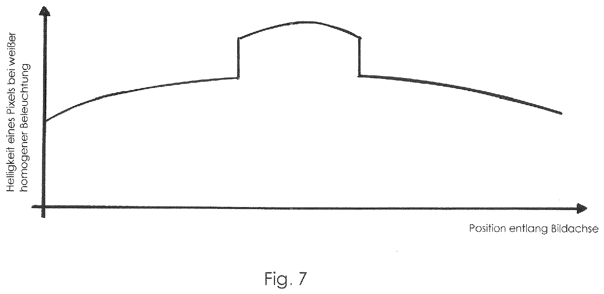

Solche Intensitätsunterschiede ergeben sich, u.a. weil die Lichtstrahlen je nach Perspektive unterschiedliche Bereiche der Linsensysteme durchlaufen. Infolgedessen wirken sich spezifische Vignettierungs- und/oder Verzerrungseigenschaften der Linsengruppen auf die einzelnen Bilder unterschiedlich stark aus. In der beispielhaft in Fig. 7 dargestellte Helligkeitsverteilung ist das deutlich zu erkennen. Hier ist auch die Helligkeitsdämpfung infolge der Spiegelung erkennbar.

Da es zur Erstellung einer plenoptischen Bildaufzeichnung, insbesondere zur Erlangung der Information über den Abstand von Gegenständen im Objektbereich von der optischen Einrichtung 1 notwendig ist, dass die einzelnen Bildpunkte in der herkömmlichen zweidimensionalen Darstellung kongruent sind, ist eine Bildkorrektur der Bildaufnahmen notwendig. Insbesondere können die Positionen der Bildpunkte und/oder deren Intensität und/oder Farbe derart verändert werden, dass sie zueinander passen. Ein Vorteil der Anpassung ist, dass auch die Möglichkeit geschaffen, wird innerhalb der plenoptischen Aufzeichnung den Blickwinkel zu wechseln, ohne das optische Inhomogenitäten erscheinen.

Um festzustellen, wie eine entsprechende Bildkorrektur vorgenommen werden kann, wird ein Referenzmuster senkrecht zur optischen Achse und parallel zu der Ebene angeordnet, in der die Empfangsfläche angeordnet ist und eine Aufzeichnung der Abbildungsinformationen auf Empfängerfläche 2 erstellt. Geeignete Referenzmuster sind beispielhaft in Fig. 5 gezeigt.

Anhand der Bildaufnahme und eines Referenzmusters, ggf. einer Referenzaufzeichnung, die das Referenzmuster optimal wiedergibt, lassen sich Differenzen der Positionen der mit der Aufnahme erfassten Bildpunkte der Bildaufnahme mit den Positionen, in denen die Bildpunkte bei korrekter Darstellung angeordnet sein müssten ermitteln und sich daraus Bildpunktanordnungsregeln bestimmen. Für Bereiche, die zwischen den mittels der Referenzmuster unmittelbar ermittelbaren Bildpunkten liegen, lassen sich die Bildpunktanordnungsregeln z.B. durch Interpolation bestimmen.

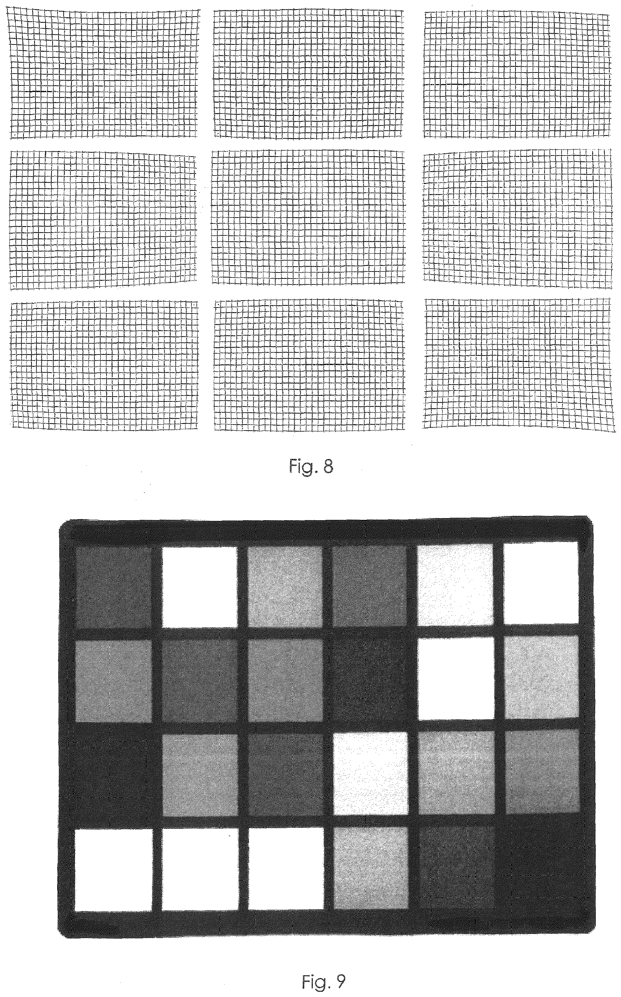

Ein Beispiel für eine Aufzeichnung der Abbildungsinformationen des Referenzmusters nach Fig. 5 b) ist in Fig. 8 dargestellt. Abbildungsfehler sind dort deutlich erkennbar.

Bei der Bestimmung der Bildpunktanordnungsregeln wird ermittelt, an welcher Stelle der jeweilige in der Abbildung erzeugte Bildpunkte zur Bildung einer korrekten Bildaufnahme in der Bildaufnahme anzuordnen ist und ausgehend davon eine Anordnungsregel, die eine Versetzung des Bildpunkts umfassen kann, erstellt. Es versteht sich, dass eine Anordnungsregel für jeden der Bildpunkte vorgesehen ist.

Zur Korrektur der Intensität der Bildpunkte werden Abtastwerte aus dem Bildfeld eines gleichmäßig beleuchteten weißen Objekts ermittelt. Die Korrekturwert für jeden einzelnen Bildpunkt werden durch eine geeignete Interpolation aus den ermittelten Korrekturabtastwerten berechnet. Fig. 7 zeigt beispielhaft eine Intensitätsverteilung, die eine typische Intensitätsreduzierung infolge einer mehrfachen Spiegelung erkennen lässt. Zur Korrektur werden Intensitätswerte aus dem Bildfeld eines homogen beleuchteten weißen Objekts ermittelt. Die Korrekturwert für jeden einzelnen Bildpunkte werden durch eine geeignete Interpolation aus den ermittelten Korrekturabtastwerten berechnet.

Eine lichtwellenlängenabhängige Intensitätsschwankung die z.B. aufgrund von Inhomogenitäten der Beschichtung der Spiegeloberflächen auftreten kann, wird optional durch eine wellenlängenabhängige Änderung der jeweiligen Intensitäten korrigiert. Vorgesehen sein kann, dass die Intensitäten farbabhängig, vorzugsweise abhängig vom Farbkanal, insbesondere vom RGB-Farbkanal, geändert werden. Besonders bevorzugt wird die Intensität individuell für jede Farbe, insbesondere für jeden Farbkanal, korrigiert.

Um die Farben der einzelnen Bildpunkte korrigieren zu können, wird zumindest ein Farbreferenzmuster aufgenommen, das eine Vielzahl von Farben aufweist, oder es werden mehrere Aufnahmen verschiedener einfarbiger Farbreferenzmuster aufgenommen. Ein Farbreferenzmuster mit einer Vielzahl von Farben ist - hier lediglich in schwarz/weiß - in Fig. 9 gezeigt. Es weist mehrere rechteckige Fläche unterschiedlicher Färbung auf.

Anhand der Bildaufnahme und einer Farbreferenzaufzeichnung, die das Farbreferenzmuster optimal wiedergibt, lassen sich Differenzen der Farben der mit der Aufnahme erfassten Bildpunkte der Bildaufnahme mit den Farben, in denen die Bildpunkte bei korrekter Darstellung aufweisen müssten, ermitteln und sich daraus Bildpunktfarbänderungsregeln bestimmen. Für Bereiche, die zwischen den mittels der Referenzmuster unmittelbar ermittelbaren Bildpunkten liegen, lassen sich die Bildpunktfarbänderungsregeln z.B. durch Interpolation bestimmen.

In Fig. 6 sind die Abbildungen in der oberen Bildzeile in der Mitte und der mittleren Bildzeile rechts aus dem 3 x 3 - Rasters aus Fig. 4 einzeln vor und nach der Bildkorrektur gezeigt.

## Patentansprüche

1. Verfahren zur Erstellung einer plenoptischen Bildaufzeichnung, bei dem mehrere Abbildungen eines Objektbereichs, die mittels einer optischen Einrichtung gleichzeitig nebeneinander auf einer Empfängerfläche erzeugt und digital gespeichert werden, zu Bildaufnahmen weiterarbeitet werden,
wobei bei der Weiterverarbeitung automatisch eine Bildkorrektur erfolgt, bei der zumindest eine der Bildaufnahmen gegenüber der jeweiligen Abbildung geändert wird,
**dadurch gekennzeichnet,**
**dass** Bildpunkte unter Anwendung von für jede der Abbildungen vorgesehenen Bildpunktkorrekturregeln verändert werden, wobei Bildpunktpositionen unter Anwendung von für jede der Bildaufnahmen vorgesehenen Bildpunktanordnungsregeln und/oder Intensitäten und/oder Farben der Darstellung der Bildpunkte unter Anwendung von für jede der Bildaufnahmen vorgesehenen Bildpunktintensitäts- und/oder Bildpunktfarbänderungsregeln geändert werden.

2. Verfahren nach Anspruch 1,
**dadurch gekennzeichnet,**
**dass** für jede der Abbildungen eine für die jeweilige Abbildung spezifische Bildkorrektur durchgeführt wird, wobei sich die jeweiligen spezifischen Bildkorrekturen für die einzelnen Abbildungen vorzugsweise voneinander unterscheiden.

3. Verfahren nach Anspruch 1 oder 2,
**dadurch gekennzeichnet,**
**dass** bei der Weiterverarbeitung zumindest einzelner der Abbildungen automatisch eine die Bildaufnahme gegenüber der jeweiligen Abbildung ändernde Bildkorrektur erfolgt derart, dass die Bildaufnahmen aneinander angeglichen werden.

4. Verfahren nach einem der Ansprüche 1 bis 3,
**dadurch gekennzeichnet,**
**dass** zur Durchführung der Bildkorrektur in zumindest einzelnen der Bildaufnahmen, vorzugsweise in jeder der Bildaufnahmen, Positionen zumindest einzelner Bildpunkte und/oder Intensitäten der Darstellung zumindest einzelner der Bildpunkte geändert werden.

5. Verfahren nach einem der Ansprüche 1 bis 4,
**dadurch gekennzeichnet,**
**dass** sich die Bildpunktanordnungsregeln und/oder die Bildpunktintensitäts- und/oder Bildpunktfarbänderungsregeln für die einzelnen Bildaufnahmen vorzugsweise voneinander unterscheiden.

6. Verfahren nach einem der Ansprüche 1 bis 5,
**dadurch gekennzeichnet,**
**dass** Bildpunktanordnungsregeln und/oder die Bildpunktintensitäts- und/oder Bildpunktfarbänderungsregeln in einem Kalibrierverfahren ermittelt werden, bei dem eine Bildaufnahme von einem Referenzobjekt, das in einer Referenzposition zu der optischen Einrichtung angeordnet ist, mit einer Referenzbeleuchtung beleuchtet wird und/oder eine Referenzfärbung aufweist, erstellt wird und die Bildpunkte und/oder die erfassten Intensitäten und/oder Farben in jeder der Bildaufnahmen mit jeweiligen Referenzabbildungspositionen und/oder Referenzintensitäten und/oder - farben, mit welchen das Referenzobjekt zur korrekten Darstellung des aufgenommenen Bereiches abzubilden ist, verglichen wird, wobei die Bildpunktanordnungsregeln und/oder die Bildpunktintensitätsänderungsregeln vorzugsweise durch Ermittlung der Differenzen der Positionen, der Intensitäten und/oder der Farben der Bildaufzeichnungen mit den Referenzabbildungspositionen und/oder Referenzintensitäten und/oder -farben bestimmt werden.

7. Verfahren nach einem der Ansprüche 5 oder 6,
**dadurch gekennzeichnet,**
**dass** die Bildkorrektur derart erfolgt, dass die Positionen, die Intensitäten und/oder die Farben der Bildpunkte derart geändert werden, dass die jeweilig denselben Abschnitt des Objektbereichs abbildenden Bildpunkte in den verschiedenen Bildaufnahmen in derselben Position und/oder in sich blickwinkelabhängig, insbesondere unter Berücksichtigung eines sich aus dem jeweiligen unterschiedlichen Blickwinkel ergebenden Parallaxenfehler, ergebenden Positionen angeordnet werden und/oder dieselbe Intensität und/oder dieselbe Farbe aufweisen wie in der Referenzposition.

8. Verfahren nach einem der Ansprüche 1 bis 7,
**dadurch gekennzeichnet,**
**dass** die Bildaufzeichnung mittels eines Abbildungssystems erzeugt sind, das die optische Einrichtung umfasst, wobei das Abbildungssystem mehrere, in Richtung einer optischen Achse aufeinanderfolgend angeordneten Abbildungseinrichtungen umfasst, wobei eine erste Abbildungseinrichtung ein reelles Zwischenbildes des Objektbereichs in einer Zwischenbildebene, eine zweite Abbildungseinrichtung, die die genannte optische Einrichtung umfasst, mindestens ein virtuelles Spiegelbild von dem reellen Zwischenbild, das in der Zwischenbildebene versetzt zu dem reellen Zwischenbild angeordnet ist, und eine dritte Abbildungseinrichtung eine gemeinsame Abbildung des reellen Zwischenbildes und des virtuellen Spiegelbildes als reelles Bild auf einer in axialem Abstand zu der Zwischenbildebene anzuordnenden Bildempfängerfläche erzeugt.

9. Verfahren nach einem der Ansprüche 1 bis 8,
**dadurch gekennzeichnet,**
**dass** auf der Empfängerfläche N x N Abbildungen des Objektbereichs gebildet und in einem N x N-Raster erzeugt sind.

10. Computerprogrammprodukt, umfassend Befehle, die bei der Ausführung
des Programms durch einen Computer, mit der optischen Einrichtung und der Empfängerfläche nach Anspruch 1, diesen veranlassen, das Verfahren nach einem der Ansprüche 1 bis 8 auszuführen.

11. Computerprogrammprodukt nach Anspruch 10,
**dadurch gekennzeichnet,**
**dass** das Computerprogrammprodukt ein auf einem Datenträger, vorzugsweise RAM, ROM, CD oder dergleichen, oder einem Gerät, insbesondere einem Personalcomputer, einem Smartphone, einem Computer einer Vorrichtung zur Erstellung einer Bildaufzeichnung, insbesondere einer Foto- und/oder Videokamera, gespeichertes Computerprogramm ist oder eine für die Übersendung über ein Rechnernetzwerk, insbesondere das Internet, geeignete, Daten darstellende Signalfolge ist.

12. Vorrichtung zur Datenverarbeitung, umfassend Mittel, die eingerichtet sind, um das Verfahren nach einem der Ansprüche 1 bis 9 auszuführen.

13. Vorrichtung nach Anspruch 12,
**dadurch gekennzeichnet,**
**dass** die Vorrichtung Teil einer optischen Einrichtung, die zur gleichzeitigen Erzeugung mehrerer Abbildungen eines Objektbereichs nebeneinander auf einer Empfängerfläche eingerichtet ist, wobei die optische Einrichtung vorzugsweise ein Kaleidoskop umfasst.

14. Vorrichtung nach Anspruch 12 oder 13,
**dadurch gekennzeichnet,**
**dass** die Vorrichtung Teil einer Kamera, insbesondere einer Foto- und/oder Videokamera ist.

15. Datenträgersignal, das das Computerprogrammprodukt nach Anspruch 10 überträgt.

## Claims

1. Method for creating a plenoptic picture recording, in which multiple images of an object area, which are generated simultaneously adjacent to one another on a receiver surface by means of an optical device and are digitally stored, are further processed to form picture captures, wherein an image correction takes place automatically during the further processing, in which at least one of the picture captures is changed in relation to the respective image,
**characterized**
**in that** image points are changed with application of image point correction rules provided for each of the images, wherein image point positions are changed with application of image point arrangement rules provided for each of the picture captures and/or intensities and/or colours of the representation of the image points are changed with application of image point intensity and/or image point colour change rules provided for each of the picture captures.

2. Method according to Claim 1,
**characterized**
**in that** for each of the images, an image correction specific for the respective image is carried out, wherein the respective specific image corrections for the individual images preferably differ from one another.

3. Method according to Claim 1 or 2,
**characterized**
**in that** during the further processing of at least some of the images, an image correction changing the picture capture in relation to the respective image takes place automatically in such a way that the picture captures are equalized to one another.

4. Method according to any of Claims 1 to 3,
**characterized**
**in that** to carry out the image correction, in at least some of the picture captures, preferably in each of the picture captures, positions of at least some image points and/or intensities of the representation of at least some of the image points are changed.

5. Method according to any of Claims 1 to 4,
**characterized**
**in that** the image point arrangement rules and/or the image point intensity and/or image point colour change rules for the individual picture captures preferably differ from one another.

6. Method according to any of Claims 1 to 5,
**characterized**
**in that** image point arrangement rules and/or the image point intensity and/or image point colour change rules are determined in a calibration method, in which a picture capture of a reference object, which is arranged in a reference position in relation to the optical device, is illuminated using a reference illumination, and/or has a reference coloration, is created and the image points and/or the acquired intensities and/or colours in each of the picture captures are compared to respective reference imaging positions and/or reference intensities and/or colours, using which the reference object is to be imaged for correct representation of the captured area, wherein the image point arrangement rules and/or the image point intensity change rules are preferably determined by determining the differences of the positions, the intensities, and/or the colours of the picture recordings from the reference imaging positions and/or reference intensities and/or colours.

7. Method according to either of Claims 5 and 6,
**characterized**
**in that** the image correction takes place in such a way that the positions, the intensities, and/or the colours of the image points are changed in such a way that the image points respectively imaging the same section of the object area are arranged in the various picture captures in the same position and/or in positions resulting depending on the viewing angle, in particular in consideration of a parallax error resulting from the respective different viewing angle, and/or have the same intensity and/or the same colour as in the reference position.

8. Method according to any of Claims 1 to 7,
**characterized**
**in that** the picture recording is generated by means of an imaging system, which comprises the optical device, wherein the imaging system comprises multiple imaging devices arranged in succession in the direction of an optical axis, wherein a first imaging device generates a real intermediate image of the object area in an intermediate image plane, a second imaging device, which comprises the mentioned optical device, generates at least one virtual mirror image of the real intermediate image, which is arranged in the intermediate image plane offset to the real intermediate image, and a third imaging device generates a joint image of the real intermediate image and the virtual mirror image as a real image on an image receiver surface to be arranged at an axial distance to the intermediate image plane.

9. Method according to any of Claims 1 to 8,
**characterized**
**in that** N x N images of the object area are formed on the receiver surface and are generated in an N x N grid.

10. Computer program product, comprising commands which, upon the execution of the program by a computer having the optical device and the receiver surface according to Claim 1, prompt said computer to carry out the method according to any of Claims 1 to 8.

11. Computer program product according to Claim 10,
**characterized**
**in that** the computer program product is a computer program stored on a data carrier, preferably RAM, ROM, CD, or the like, or a piece of equipment, in particular a personal computer, a smartphone, a computer of an apparatus for creating a picture recording, in particular a photo and/or video camera, or is a signal sequence suitable for transmission via a computer network, in particular the Internet, and representing data.

12. Apparatus for data processing, comprising means which are configured for carrying out the method according to any of Claims 1 to 9.

13. Apparatus according to Claim 12,
**characterized**
**in that** the apparatus is part of an optical device, which is configured for simultaneously generating multiple images of an object area adjacent to one another on a receiver surface, wherein the optical device preferably comprises a kaleidoscope.

14. Apparatus according to Claim 12 or 13,
**characterized**
**in that** the apparatus is part of a camera, in particular a photo and/or video camera.

15. Data carrier signal, which transmits the computer program product according to Claim 10.

## Revendications

1. Procédé de création d'un enregistrement d'image plénoptique, dans lequel plusieurs représentations d'une zone d'objet, générées simultanément les unes à côté des autres sur une surface de réception au moyen d'un dispositif optique et stockées numériquement, sont traitées pour produire des prises de vue,
dans lequel, lors du traitement, une correction d'image est effectuée automatiquement, modifiant au moins l'une des prises de vue par rapport à la représentation respective,
**caractérisé en ce que**
les points d'image sont modifiés selon des règles de correction de points d'image prévues pour chacune des représentations, les positions des points d'image étant modifiées selon des règles d'agencement de points d'image prévues pour chacune des prises de vue, et/ou les intensités et/ou les couleurs de la représentation des points d'image sont modifiées selon des règles de modification d'intensité et/ou de modification de couleur des points d'image prévues pour chacune des prises de vue.

2. Procédé selon la revendication 1,
**caractérisé en ce que**
pour chacune des représentations, une correction d'image spécifique à la représentation respective est effectuée, les corrections d'image spécifiques respectives pour les représentations individuelles étant de préférence différentes les unes des autres.

3. Procédé selon la revendication 1 ou 2,
**caractérisé en ce que**
lors du traitement d'au moins quelques des représentations, une correction d'image est effectuée automatiquement, modifiant la prise de vue par rapport à la représentation respective, de manière à ce que les prises de vue soient adaptées les unes aux autres.

4. Procédé selon l'une des revendications 1 à 3,
**caractérisé en ce que**
pour effectuer la correction d'image dans au moins quelques des prises de vue, de préférence dans chacune des prises de vue, des positions d'au moins quelques des points d'image et/ou des intensités de la représentation d'au moins quelques des points d'image sont modifiées.

5. Procédé selon l'une des revendications 1 à 4,
**caractérisé en ce que**
les règles d'agencement des points d'image et/ou les règles de modification d'intensité des points d'image et/ou les règles de modification de couleur des points d'image pour les prises de vue individuelles diffèrent de préférence les unes des autres.

6. Procédé selon l'une des revendications 1 à 5,
**caractérisé en ce que** les règles d'agencement des points d'image et/ou les règles de modification d'intensité des points d'image et/ou de couleur des points d'image sont déterminées lors d'un processus d'étalonnage au cours duquel une prise de vue d'un objet de référence, disposé dans une position de référence par rapport au dispositif optique, éclairé par un éclairage de référence et/ou présentant une coloration de référence, est créée et les points d'image et/ou les intensités et/ou couleurs détectées dans chacune des prises de vue sont comparés aux positions de représentation de référence et/ou aux intensités et/ou couleurs de référence avec lesquelles l'objet de référence doit être représenté pour l'illustration correcte de la zone prise, les règles d'agencement des points d'image et/ou les règles de modification d'intensité des points d'image étant de préférence déterminées en déterminant les différences entre les positions, les intensités et/ou les couleurs des enregistrements d'image et les positions de représentation de référence et/ou les intensités et/ou couleurs de référence.

7. Procédé selon l'une des revendications 5 ou 6,
**caractérisé en ce que**
la correction d'image est effectuée de telle sorte que les positions, les intensités et/ou les couleurs des points d'image soient modifiées de telle sorte que les points d'image représentant chacun la même section de la zone d'objet dans les différentes prises de vue soient disposés dans la même position et/ou dans des positions résultant de l'angle de vue, en particulier en tenant compte d'une erreur de parallaxe résultant de l'angle de vue différent respectif, et/ou présentent la même intensité et/ou la même couleur que dans la position de référence.

8. Procédé selon l'une des revendications 1 à 7,
**caractérisé en ce que**
l'enregistrement d'image est généré au moyen d'un système d'imagerie comprenant le dispositif optique, le système d'imagerie comprenant plusieurs dispositifs d'imagerie disposés successivement dans la direction d'un axe optique, sachant qu'un premier dispositif d'imagerie génère une image intermédiaire réelle de la zone d'objet dans un plan d'image intermédiaire, un deuxième dispositif d'imagerie comprenant ledit dispositif optique génère au moins une image miroir virtuelle de l'image intermédiaire réelle, disposée dans le plan d'image intermédiaire en étant décalée par rapport à l'image intermédiaire réelle, et un troisième dispositif d'imagerie génère une représentation conjointe de l'image intermédiaire réelle et de l'image miroir virtuelle en tant qu'image réelle sur une surface de réception d'image à disposer à une distance axiale du plan d'image intermédiaire.

9. Procédé selon l'une des revendications 1 à 8,
**caractérisé en ce que**
N x N représentations de la zone d'objet sont formées sur la surface de réception et générées selon une trame N x N.

10. Produit de programme informatique comprenant des instructions qui, lorsque le programme est exécuté par un ordinateur équipé du dispositif optique et de la surface de réception selon la revendication 1, amènent l'ordinateur à mettre en œuvre le procédé selon l'une des revendications 1 à 8.

11. Produit de programme informatique selon la revendication 10,
**caractérisé en ce que**
le produit de programme informatique est un programme informatique stocké sur un support de données, de préférence une RAM, une ROM, un CD ou un dispositif similaire, ou sur un appareil, en particulier un ordinateur personnel, un smartphone, un ordinateur d'un appareil de création d'un enregistrement d'image, en particulier un appareil photo et/ou une caméra vidéo, ou ledit produit est une séquence de signaux constituant des données et apte à être transmise via un réseau informatique, en particulier via Internet.

12. Dispositif de traitement de données comprenant des moyens conçus pour mettre en œuvre le procédé selon l'une des revendications 1 à 9.

13. Dispositif selon la revendication 12,
**caractérisé en ce que** le dispositif fait partie d'un dispositif optique conçu pour générer simultanément plusieurs représentations d'une zone d'objet les unes à côté des autres sur une surface de réception, le dispositif optique comprenant de préférence un kaléidoscope.

14. Dispositif selon la revendication 12 ou 13,
**caractérisé en ce que** le dispositif fait partie d'une caméra, en particulier d'un appareil photo et/ou d'une caméra vidéo.

15. Signal porteur de données transmettant le produit de programme informatique selon la revendication 10.
